# EUROPEAN PATENT APPLICATION

(11) **EP 3 550 825 A1**
(43) Date of publication of application: **09.10.2019**
(21) Application number: 16922822.8
(22) Date of filing: 01.12.2016
(51) Int. Cl.: H04N 5/445, H04N 5/44, H04N 21/422, H04N 21/4363

(54) **IMAGE DISPLAY DEVICE AND IMAGE DISPLAY SYSTEM COMPRISING SAME**

(71) Applicant: LG Electronics Inc., Seoul 07336 (KR)
(72) Inventor: KIM, Dongsung, Seoul 06772 (KR)
(74) Representative: Katérle, Axel
(86) International application number: PCT/KR2016/014048
(87) International publication number: WO 2018/101514

(57) **Abstract**

Disclosed are an image display apparatus and an image display system including the same. The image display apparatus includes: a wireless receiver configured to wirelessly receive a first image of a first resolution from a first source, wirelessly receive a second image of a second resolution from a second source, merge the first image of the first resolution and the second image of the second resolution, and output a merged image; a signal processor configured to perform signal processing of the merged image received from the wireless receiver; and a display configured to display the merged image received from the signal processor. Accordingly, it is possible to wirelessly and separately receive and display at least two images.

## Description

### [Technical Field]

The present invention relates to an image display apparatus and an image display system including the same, and more particularly to an image display apparatus capable of wirelessly and separately receiving and displaying at least two images and an image display system including the same.

### [Background Art]

An image display apparatus is an apparatus having a function of providing an image that a user can view. The user is able to watch a broadcast using the image display apparatus. The image display apparatus provides a broadcast selected by the user from among broadcast signals transmitted by broadcasting companies, and a corresponding broadcast image is displayed on a display. Recently, there is a global trend to shift analog broadcasting to digital broadcasting.

Digital broadcasting refers to a broadcasting technique of transmitting a digital image and an audio signal. Compared to analog broadcasting, the digital broadcasting is strong against external noise and has a small data loss, is advantageous for error correction, has a high resolution, and provides a clear screen. Also, unlike the analog broadcasting, the digital broadcasting is capable of bidirectional service.

### [Disclosure]

### [Technical Problem]

An object of the present invention is to provide an image display apparatus capable of wirelessly and separately receiving and displaying at least two images.

### [Technical Solution]

In order to achieve the aforementioned object, an image display apparatus according to an embodiment of the present invention includes: a wireless receiver configured to wirelessly receive a first image of a first resolution from a first source, wirelessly receive a second image of a second resolution from a second source, merge the first image of the first resolution and the second image of the second resolution, and output a merged image; a signal processor configured to perform signal processing of the merged image received from the wireless receiver; and a display configured to display the merged image received from the signal processor.

In order to achieve the aforementioned object, an image display system according to an embodiment of the present invention includes: an image transmission apparatus, wherein the image transmission apparatus includes a signal processor configured to receive a first image from a first input terminal, perform signal processing of the first image and the second image, and output the first image and the second image signal-processed, and a wireless transmitter configured to split the first image and the second image received from the signal processor, wirelessly transmit the first image at a first channel in a first frequency band, and wirelessly transmit the second image at a second channel in the first frequency band; and an image display apparatus, wherein the image display apparatus includes a wireless receiver configured to wirelessly receive the first image of the first resolution and the second image of the second resolution from the image transmission apparatus, merge the first image of the first resolution and the second image of the second resolution, and output a merged image, a signal processor configured to perform signal processing of the merged image received from the wireless receiver, and a display configured to display the merged image received from the signal processor.

### [Advantageous Effects]

An image display apparatus according to an embodiment of the present invention includes: a wireless receiver configured to wirelessly receive a first image of a first resolution from a first source, wirelessly receive a second image of a second resolution from a second source, merge the first image of the first resolution and the second image of the second resolution, and output a merged image; a signal processor configured to perform signal processing of the merged image received from the wireless receiver; and a display configured to display the merged image received from the signal processor, and accordingly, it is possible to wirelessly and separately receive and display at least two images.

In particular, stable wireless reception is enabled as a first image and a second image are received at different wireless channels from an image transmission apparatus, and therefore, it is possible to display the two images by merging the same.

Meanwhile, a first image may be received wirelessly from the image transmission apparatus and a second image may be received wirelessly from a mobile terminal, and accordingly, it is possible to wirelessly and separately receive two images from different sources and display the same.

An image display system according to an embodiment of the present invention includes: an image transmission apparatus, wherein the image transmission apparatus includes a signal processor configured to receive a first image from a first input terminal, perform signal processing of the first image and the second image, and output the first image and the second image signal-processed, and a wireless transmitter configured to split the first image and the second image received from the signal processor, wirelessly transmit the first image at a first channel in a first frequency band, and wirelessly transmit the second image at a second channel in the first frequency band; and an image display apparatus, wherein the image display apparatus includes a wireless receiver configured to wirelessly receive the first image of the first resolution and the second image of the second resolution from the image transmission apparatus, merge the first image of the first resolution and the second image of the second resolution, and output a merged image, a signal processor configured to perform signal processing of the merged image received from the wireless receiver, and a display configured to display the merged image received from the signal processor, and accordingly, it is possible to wirelessly and separately receive and display at least two images.

In particular, stable wireless reception is enabled as a first image and a second image are received at different wireless channels from an image transmission apparatus, and therefore, it is possible to display the two images by merging the same.

Meanwhile, the image transmission apparatus may receive inputs of selection of a first input terminal and a second input terminal included in the signal processor from a mobile terminal, activate the first input terminal and the second input terminal based on the received selection inputs, and receive the first image from the first input terminal and the second image from the second input terminal, and accordingly, it is possible to conveniently select an image desired by a user and wirelessly and separately receive and display the selected two images.

### [Description of Drawings]

FIG. 1 is a diagram showing an image display system according to an embodiment of the present invention.
FIG. 2 is an exemplary internal block diagram of the image display system shown in FIG. 1.
FIG. 3 is an example of an internal block diagram of the controller shown in FIG. 3.
FIG. 4A is a diagram showing a control method of a remote controller.
FIG. 4B is an internal block diagram of a remote controller.
FIG. 5 is an internal block diagram of the mobile terminal shown in FIG. 1.
FIGS. 6A to 8 are diagrams referred to in the description of the image display system shown in FIG. 1.
FIGS. 9A and 9B are diagrams showing an image display system according to various embodiments of the present invention.

### [Best Mode]

Exemplary embodiments of the present invention will be described with reference to the attached drawings.

In the following description, the suffixes "module" and "unit" of elements herein are used for convenience of description and do not have any distinguishable meanings or functions. Accordingly, "module" and "unit" can be used interchangeably.

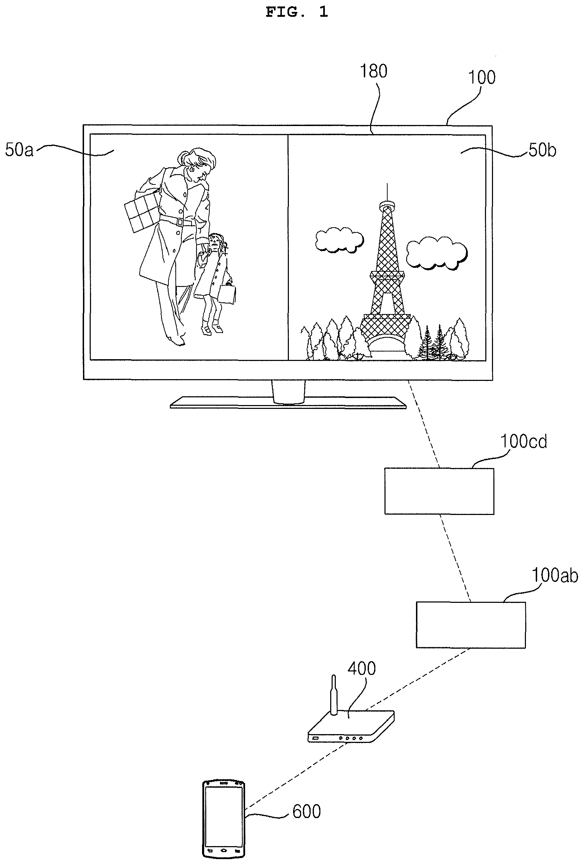

FIG. 1 is a diagram showing an image display system according to an embodiment of the present invention.

Referring to the drawing, an image display system 10 may include an image transmission apparatus 100ab and an image display apparatus 100cd. In addition, the image display system 10 may include a mobile terminal 600 and an AP device 400.

Meanwhile, while the image display apparatus 100cd and a display apparatus 100 including a display 180 are illustrated as being separate in the drawing, the image display apparatus 100cd may include the display apparatus 100 including the display 180.

Meanwhile, the mobile terminal 600 may exchange data with the image transmission apparatus 100ab and the image display apparatus 100cd via the AP device 400 or by itself.

In particular, if at least two or more image sources are selected, the mobile terminal 600 may transmit a selection signal to the image transmission apparatus 100ab or the image display apparatus 100cd.

Meanwhile, the image transmission apparatus 100ab and the image display apparatus 100cd may exchange data with each other wirelessly.

In particular, the image transmission apparatus 100ab may wirelessly transmit a first image and a second image, each having 2K resolution, to the image display apparatus 100cd at different frequency channels.

Accordingly, the image display apparatus 100cd may wirelessly receive the first image and the second image, each having 2K resolution, and merge the first image and the second image to display a merged image having 4K resolution.

In particular, as shown in the drawing, a first image 50a and the second image 50b are displayed on the left side and the right side of the display 180, respectively, and therefore two images desired by a user may be displayed conveniently.

In particular, as for wireless transmission, images having 2K resolution are transmitted at different channels, thereby enhancing efficiency of the wireless transmission and increasing resistance against noise.

Meanwhile, a wireless frequency band between the image transmission apparatus 100ab and the image display apparatus 100cd may be 60GHz.

For example, communication schemes such as WiDi, WiGig, WiFi, and the like enable data exchange between the image transmission apparatus 100ab and the image display apparatus 100cd.

The image display apparatus 100cd may include: a wireless receiver configured to wirelessly receive a first image of a first resolution from a first source, wirelessly receive a second image of a second resolution from a second source, merge the first image of the first resolution and the second image of the second resolution, and output a merged image; a signal processor 100d configured to perform signal processing of the merged image received from the wireless receiver 100c; and a display 180 configured to display the merged image received from the signal processor 100d, and accordingly, it is possible to wirelessly and separately receive and display at least two images.

In particular, stable wireless reception may be enabled as the image display apparatus 100cd receives the first image and the second image from the image transmission apparatus 100ab at different wireless channels, and thus, it is possible to display the two images by merging the same.

Meanwhile, the first image may be wirelessly received from the image transmission apparatus 100ab and the second image may be wirelessly received from the mobile terminal 600, and accordingly, it is possible to wirelessly and separately receive and display two images from different sources.

Meanwhile, the image display system 10 may include: an image transmission apparatus 100ab, wherein the image transmission apparatus 100ab includes a signal processor 100a configured to receive a first image from a first input terminal and a second image from a second input terminal, perform signal processing of the first image and the second image, and output the first image and the second image signal-processed, and a wireless transmitter 100b configured to split the first image and the second image received from the signal processor 100a, wirelessly transmit the first image at a first channel in a first frequency band, and wirelessly transmit the second image at a second channel in the first frequency band; and an image display apparatus 100cd, wherein the image display apparatus 100cd includes a wireless receiver 100c configured to wirelessly receive a first image of a first resolution and a second image of a second resolution from the image transmission apparatus 100ab, merge the first image of the first resolution and the second image of the second resolution, and output a merged image, a signal processor 100d configured to perform signal processing of the merged image received from the wireless receiver 100c, and a display 180 configured to display the merged image received from the signal processor 100d, and accordingly, it is possible to wirelessly and separately receive and display at least two images.

In particular, stable wireless reception may be enabled as the first image and the second images are received at different wireless channels from the image transmission apparatus 100ab, and thus, it is possible to display the two images by merging the same.

Meanwhile, the image transmission apparatus 100ab may receive inputs of selection of a first input terminal and a second input terminal included in the signal processor 100d from the mobile terminal 600, activate the first input terminal and the second terminal based on the received inputs, and receive a first image from the first input terminal and a second image from the second input terminal, and accordingly, it is possible to conveniently select an image desired by a user and to wirelessly and separately receive and display two selected images.

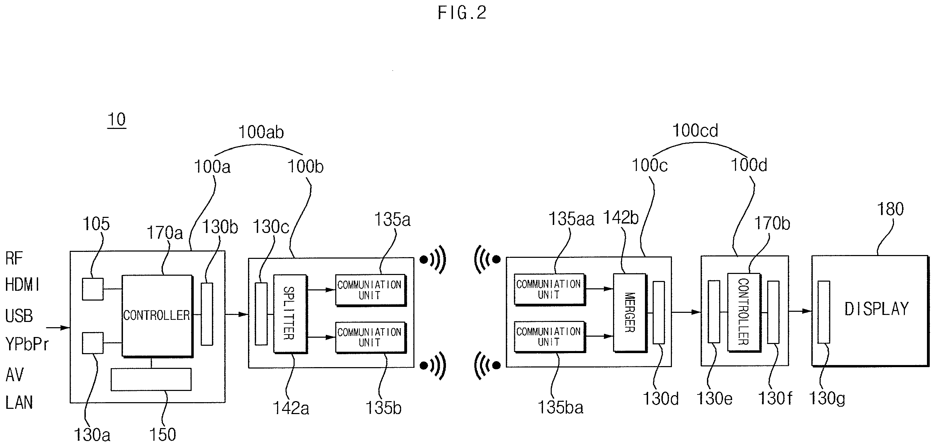

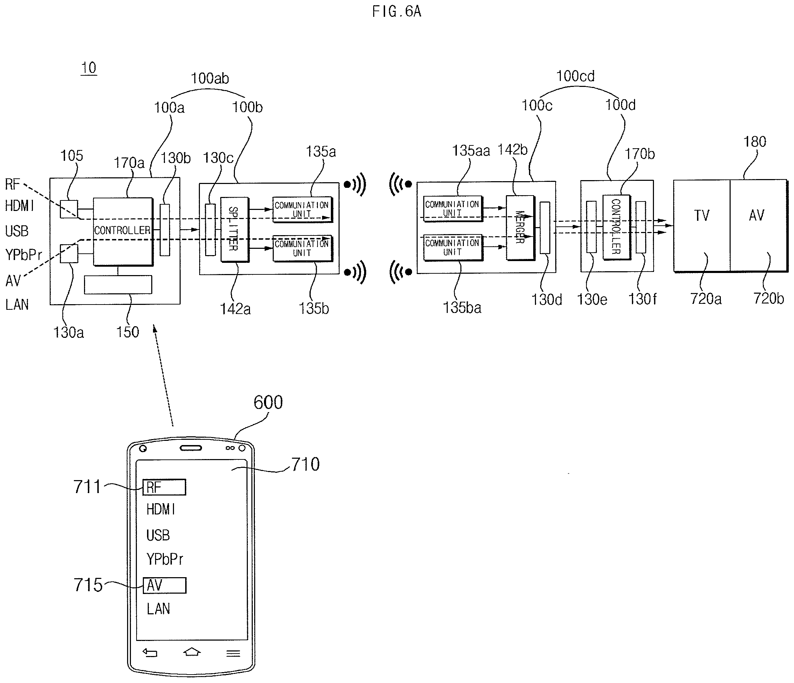

Operation of each unit in the aforementioned image display system 10 will be described in more detail with reference to FIGS. 2 and 6A.

FIG. 2 is an exemplary internal block diagram of the image display system shown in FIG. 1.

Referring to FIG. 2, an image display system 10 according to an embodiment of the present invention may include an image transmission apparatus 100ab and an image display apparatus 100cd.

The image transmission apparatus 100ab may include: a signal processor 100a configured to receive a first image from a first input terminal and a second image from a second input terminal, perform signal processing of the first image and the second image, and output the first image and the second image signal-processed; and a wireless transmitter 100b configured to split the first image and the second image received from the signal processor 100a, wirelessly transmit the first image at a first channel in a first frequency band, and wirelessly transmit the second image at a second channel in the first frequency band.

The signal processor 100a may include an image receiver 105, a network interface unit 130a, a user input interface unit 150, a controller 170a, and a second interface unit 130b.

The image receiver 105 may include a plurality of input terminals. As shown in the drawing, the image receiver 105 may include an RF terminal (in other words, an antenna terminal) for receiving a broadcast signal, an HDMI terminal for receiving HDMI data from an external device, a USB terminal for receiving and transmitting data with respect to an external device, a YPbPr terminal for receiving a signal from an external device, an AV terminal, and a LAN terminal for receiving data via a network.

Meanwhile, the image receiver 105 may include a tuner (not shown), a modulator, and the like to select a Radio Frequency (RF) broadcast signal corresponding to a channel selected by a user or every pre-stored channel among RF broadcast signals received from an RF terminal.

The network interface unit 130a may provide an interface for connecting the image transmission apparatus 100ab to a wired/wireless network that includes the Internet. For example, the network interface unit 130a may receive content or data provided by an Internet or content provider or an network operator via a network, or may receive data from the mobile terminal 600.

Meanwhile, the network interface unit 130a may include a wireless communication unit (not shown).

The controller 170a may perform signal processing of an image or data received through the image receiver 105 and the network interface unit 130a.

For example, the controller 170a may demultiplex an input stream and process demultiplexed signals to generate and output a signal for outputting an image or audio.

In addition, the controller 170a may control the image transmission apparatus 100ab by a user command input through the user input interface unit 150 or by an internal program.

The controller 170a may receive a first image from the first input terminal and a second image from the second input terminal, perform signal processing of the first image and the second image, and output the first image and the second image signal-processed.

In particular, the controller 170a may control to receive inputs of selection of the first input terminal and the second input terminal included in the signal processor 100d, to activate the first input terminal and the second input terminal based on the received selection inputs, and thereby to receive a first image from the first input terminal and a second image from the second input terminal.

In particular, when transmission from the first input terminal in the signal processor 100d of the mobile terminal 600 is selected, the controller 170a may control to receive an input of selection of the first input terminal from the mobile terminal 600, to activate the first input terminal based on the received input, and thereby to receive the first image from the first input terminal.

Meanwhile, the second interface unit 130b may transmit the first image and the second image, received from the controller 170a, through wire to the wireless transmitter 100b.

Meanwhile, the first image and the second image may be images having a FHD resolution of 1920*1080.

The wireless transmitter 100b may split the first image and the second image received from the signal processor 100a, wirelessly transmit the fist image at a first channel in a first frequency band, and wirelessly transmit the second image in a second channel in the first frequency band.

To this end, the wireless transmitter 100b may include a third interface unit 130c, a splitter 142a, and communication units 135a and 135b.

The third interface unit 130c may receive the first image and the second image from the second interface unit 130b in the signal processor 100a.

The splitter 142a may split the first image and the second image received from the third interface unit 130c.

In this case, the splitter 142a may output the first image and the second image, each having 2K resolution (1920*2160), by interpolating the first image and the second image, each having a FHD resolution.

Meanwhile, the first and second communication units 135a and 135b may wirelessly transmit the first image and the second image, each having 2K resolution (1920x 2160), at the first channel and the second channel in the first frequency band.

As described above, as a frequency band of 60GHz is used, data transmission without loss and without compression are possible.

The image display apparatus 100cd may include: a wireless receiver 100c configured to wirelessly receive a first image of a first resolution and a second image of a second resolution from the image transmission apparatus 100ab, merge the first image of the first resolution and the second image of the second resolution, and output a merged image; a signal processor 100d configured to perform signal processing of the merged image received from the wireless receiver 100c; and a display 180 configured to display the merged image received from the signal processor 100d.

The wireless receiver 100c may wirelessly receive the first image of the first resolution and the second image of the second resolution from the image transmission apparatus 100ab, particularly the wireless transmitter 100b. In this case, the first resolution and the second resolution may be 2K resolution.

To this end, the wireless receiver 100c may include communication units 135aa and 135ba, an merger 142b, and a fourth interface unit 130d.

The first and second communication units 135aa and 135ba may wirelessly receive the first image and the second image, each having 2K resolution (1920*2160), at a first channel and a second channel in a first frequency band.

The merger 142b may merge the first image and the second image received from the first and second communication units 135aa and 135ba. It is possible to merge images in a side-by-side manner, as shown in FIG. 1, or otherwise in a top-and-bottom manner.

In this case, a merged image output from the merger 142b may have 2K+2k resolution which is 4K resolution (3840*2160).

The fourth interface unit 130d may transmit the merged image output from the merger 142b to the signal processor 100d.

The signal processor 100d may receive the merged image from the wireless receiver 100c, particularly the fourth interface unit 130d, and perform signal processing.

To do so, the signal processor 100d may include a fifth interface unit 130e, a controller 170b, and a sixth interface unit 130f. In addition, the signal processor 100d may further include a user input interface unit (not shown) to receive a signal from a remote controller 200 or display a pointer based on the reception of the signal.

The fifth interface unit 130e may receive the merged image from the fourth interface unit 130d, the controller 170b may perform signal processing (noise reduction, etc.) on the merged image, and the sixth interface unit 130f may transmit the merged image, received from the controller 170b, to the display 180 in the display apparatus 100.

The display apparatus 100 may include a seventh interface unit 130g to receive the merged image from the sixth interface unit 130f of the signal processor 100d, and the display 180 to display the merged image.

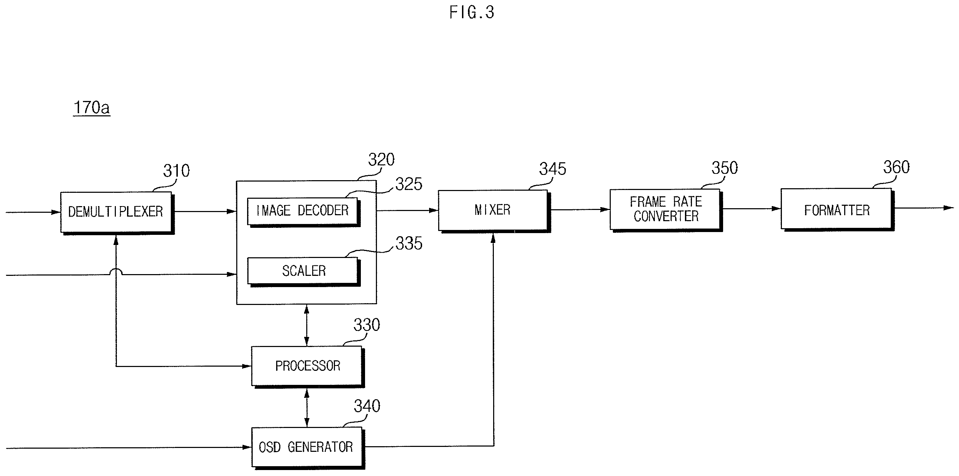

Meanwhile, although not shown in FIG. 2, the controller 170a or 170b may be implemented in the form of a System On Chip (SOC) and include a demultiplexer, an image processing unit, and the like. A description thereof will be provided with reference to FIG. 3.

Meanwhile, the block diagram of the image display system 10 shown in FIG. 2 is a block diagram for an embodiment of the present invention. Component in the block diagram may be integrated, added, or omitted according to the specifications of the image display apparatus 100cd that is actually embodied. That is, as necessary, two or more components may be integrated into one component or one component may be divided into two or more components. In addition, a function performed by each block is merely an embodiment of the present invention, and the scope of the present invention is not limited by a detailed operation or device.

FIG. 3 is an example of an internal block diagram of the controller shown in FIG. 3.

With reference to the drawing, the controller 170a or 170b according to an embodiment of the present invention each may further include a demultiplexer 310, an image processing unit 320, a processor 330, an on-screen display (OSD) generator 340, a mixer 345, a fame rate converter 350, and a formatter 360. In addition, the controller 170a or 170b may further include an audio processing unit (not shown) and a data processing unit (not shown).

The demultiplexer 310 may demultiplex an input stream. For example, if a MPEG-2 TS is input, the demultiplexer 310 may demultiplex the MPEG-2 TS so as to be divided into image, audio, and data signals. Here, a stream signal input to the demultiplexer 310 may be a stream signal output from the tuner 110, a demodulator 120, or an external interface unit 130.

The image processor 320 may process a demultiplexed image signal. To do so, the image processor 320 may include an image decoder 325 and a scaler 335.

The image decoder 325 may decode the demultiplexed image signal, and scale the decoded image signal to the display 180.

The image decoder 325 may include decoders implementing different protocols. For example, the image decoder 325 may include a MPEG-2 or H.264 decoder, a 3D image decoder for a color image and a depth image, a decoder for a multi-viewpoint image, etc.

The processor 330 may control overall operations in the image display apparatus 100cd or the controller 170a. For example, the processor 330 may control the tuner 110 to tune to an RF broadcast that corresponds to a channel selected by a user or a pre-stored channel.

In addition, the processor 330 may control the image display apparatus 100cd by a user instruction input through the user input interface unit 150 or by an internal program.

In addition, the processor 330 may perform data transmission control with respect to the network interface unit 135 or the external interface unit 130.

In addition, the processor 330 may control operations of the demultiplexer 310, the image processing unit 320, the OSD generator 340, and the like in the controller 170a.

The OSD generator 340 generates an OSD signal in response to a user input or by itself. For example, based on a user input signal, a signal for displaying various types of information in a graphic or text form on a screen of the display 180 may be generated. The generated OSD signal may include various types of data such as a user interface screen of the image display apparatus 100cd, various menu screens, widgets, icons, etc. In addition, the generated OSD signal may include a 2D object or a 3D object.

In addition, the OSD generator 340 may generate a pointer to be displayed on the display based on a pointing signal input from the remote controller 220. In particular, such a pointer may be generated by a pointing signal processor, and the OSD generator 240 may include the pointing signal processor (not shown). Of course, the pointing signal processor (not shown) may be provided separately not within the OSD generator 240.

The mixer 345 may mix an OSD signal generated by the OSD generator 340 and a demultiplexed image signal image-processed by the image processing unit 320. A mixed image signal is provided to the frame rate converter 350.

The frame rate converter (FRC) 350 may convert a frame rate of an input image. Meanwhile, the frame rate converter 350 may be able to output an image signal intact without performing frame rate conversion.

The formatter 360 may arrange a left-eye image frame and a right-eye image frame of a frame-rate-converted 3D image. In addition, the formatter 360 may output a synchronization signal Vsync to open a left-eye glass and a right-eye glass of a 3D display apparatus (not shown).

Meanwhile, the formatter 360 may change a format of an input image signal into a format suitable for displaying the image signal on a display.

In addition, the formatter 360 may change a format of a 3D image signal. For example, the formatter 360 may change a format of a 3D image signal into any one of various 3D formats including a side-by-side format, a top/down format, a frame sequential format, an interlaced format, a checker box format, etc.

Meanwhile, the formatter 360 may convert a 2D image signal into a 3D image signal. For example, according to a 3D image generation algorithm, the formatter 360 may detect an edge or selectable object from a 2D image signal, separate an object defined by the detected edge or the selectable object into a 3D image signal. In this case, the generated 3D image signal may be separated into a left-eye image signal L and a right-eye image signal R, as described above.

Meanwhile, although not shown in the drawing, a 3D processor (not shown) may be further provided after the formatter 360 to perform signal processing for 3-dimensional (3D) effect. The 3D processor (not shown) may control the brightness, tint, and color of the image signal to enhance the 3D effect. For example, signal processing and so on may be performed to make a short distance be in focus and to make a long distance be out of focus. The function of the 3D processor may be integrated with the formatter 360 or the image processor 320.

The audio processor (not shown) in the controller 170a or 170b may perform voice-processing of the demultiplexed voice signal. To do so, the audio processor (not shown) may include various decoders.

In addition, the audio processor (not shown) in the controller 170a or 170b may control base, treble, volume, and so on.

The data processor (not shown) in the controller 170a may perform data-processing of the demultiplexed data signal. For example, when the demultiplexed data signal is an encoded data signal, the data processor (not shown) may decode the encoded data signal. The encoded data signal may be electronic program guide (EPG) information including broadcast information such as start time and finish time of a broadcast program that is broadcasted on each channel.

The block diagram of the controller 170a or 170b in FIG. 3 is a block diagram for an embodiment of the present invention. Components in the block diagram may be integrated, added, or omitted according to the specifications of the controller 170a or 170b that is actually embodied.

In particular, the frame rate converter 350 and the formatter 360 may be provided separately not within the controller 170a or 170b or may be provided separately as one module.

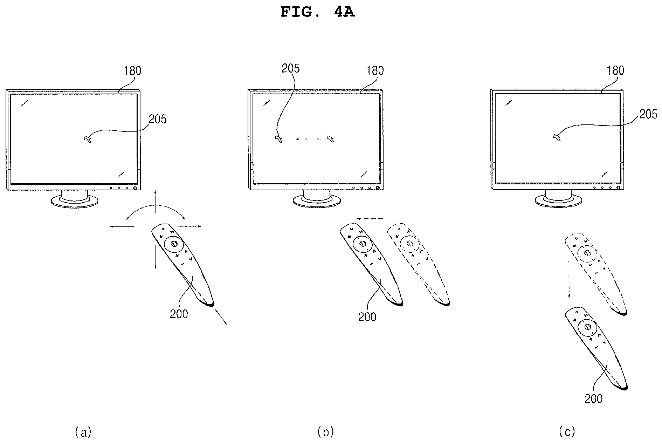

FIG. 4A is a diagram showing a control method of the remote controller.

FIG. 4A(a) illustrates the case in which a pointer 205 corresponding to the remote controller 200 is displayed on the display 180.

A user may move or rotate the remote controller 200 up and down, right and left (FIG. 4A(b)), and forward and backward (FIG. 4A(c)). The pointer 205 displayed on the display 180 of the image display apparatus 100cd may correspond to movement of the remote controller 200. As shown in the drawing, the corresponding pointer 205 is displayed as moving in accordance with movement in a 3D space, and thus, the remote controller 200 may be referred to as a spatial remote controller or a 3D pointing device.

FIG. 4A(b) illustrates the case in which, when a user moves the remote controller 200 to the left, the pointer 205 displayed on the display 180 of the image display apparatus also moves to the left in response to the movement of the remote controller.

Information on movement of the remote controller 200, detected through the sensor of the remote controller 200, may be transmitted to the image display apparatus. The image display apparatus may calculate coordinates of the pointer 205 from the information on the movement of the remote controller 200. The image display apparatus may display the pointer 205 to correspond to the calculated coordinates.

FIG. 4A(c) illustrates the case in which a user moves the remote controller 200 away from the display 180 while pushing a specific button in the remote controller 200. Accordingly, a selected area of the display 180, corresponding to the pointer 205, may be zoomed in to be enlarged and displayed. On the other hand, when the user moves the remote controller 200 close to the display 180, the selected area of the display 180, corresponding to the pointer 205, may be zoomed out to be reduced and displayed. When the remote controller 200 is moved away from the display 180, the selected area may be zoomed out, and, when the remote controller 200 becomes close to the display 180, the selected area may be zoomed in.

While a specific button of the remote controller 200 is pushed, recognition of up/down and right/left may be excluded. That is, when the remote controller 200 is moved away from or close to the display 180, up/down and right/left movement may not be recognized and only forward and backward movement may be recognized. While a specific button of the remote controller 200 is not pushed, only the pointer 205 may move in accordance with up/down and right/left movement of the remote controller 200.

The moving speed or moving direction of the pointer 205 may correspond to the moving speed or moving direction of the remote controller 200.

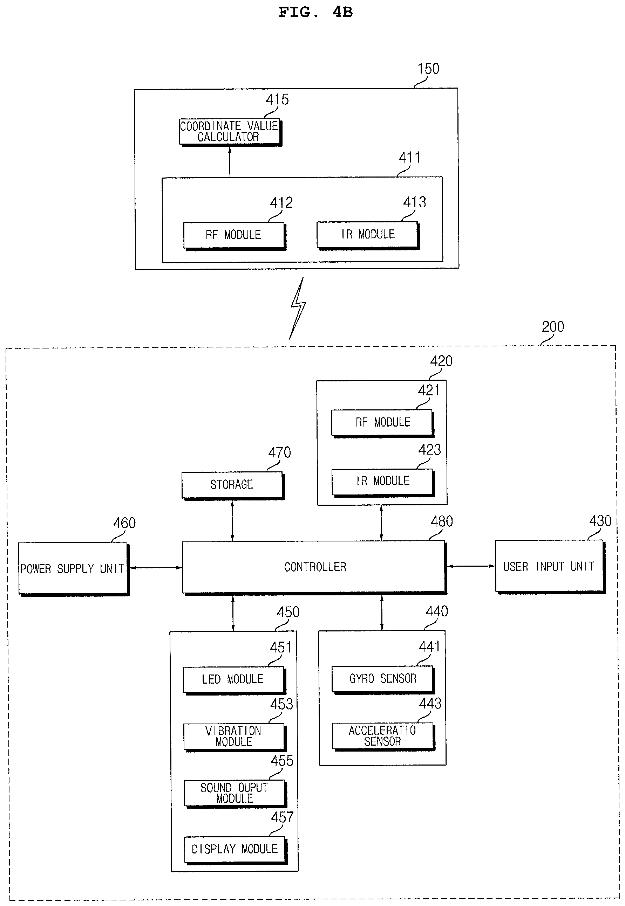

FIG. 4B is an internal block diagram of the remote controller.

Referring to the drawing, the remote controller 200 may include a wireless communication unit 425, a user input unit 435, a sensor unit 440, an output unit 450, a power supply unit 460, a storage 470, and a controller 480.

The wireless communication unit 425 may transmit and receive a signal to and from any one of image display apparatus according to the aforementioned embodiments of the present invention. Among the image display apparatus according to embodiments of the present invention, an example of the image display apparatus 100cd will be described.

According to the embodiment, the remote controller 200 may include an RF module 421 that is capable of transmitting and receiving signals to and from the image display apparatus 100cd according to RF communication protocols. In addition, the remote controller 200 may include an IR module 423 that is capable of transmitting and receiving signals to and from the image display apparatus 100cd according to IR communication protocols.

According to the embodiment, the remote controller 200 may transmit a signal including information on movement of the remote controller 200 to the image display apparatus 100cd through the RF module 421.

In addition, the remote controller 200 may receive the signal transmitted from the image display apparatus 100cd through the RF module 421. As necessary, the remote controller 200 may transmit a command regarding power on/off, channel change, volume control, and so on to the image display apparatus 100cd through the IR module 423.

The user input unit 435 may include a keypad, a button, a touchpad, a touchscreen, or the like. A user may manipulate the user input unit 435 to input a command associated with the image display apparatus 100cd to the remote controller 200. When the user input unit 435 includes a hard key button, the user may input a command associated with the image display apparatus 100cd to the remote controller 200 by pushing the hard key button. When the user input unit 435 includes a touchscreen, the user may touch a soft key of the touchscreen to input a command associated with the image display apparatus 100cd to the remote controller 200 by touching the soft key of the touch screen. In addition, the user input unit 435 may include various types of input elements that the user is capable of manipulating, such as a scroll key or a jog key, and the present embodiment does not limit the scope of the present invention.

The sensor unit 440 may include a gyro sensor 441 or an acceleration sensor 443. The gyro sensor 441 may sense information about movement of the remote controller 200.

For example, the gyro sensor 441 may sense information about an operation of the remote controller 200 based on the x, y, and z-axes. The acceleration sensor 443 may sense information on the moving speed of the remote controller 200. The sensor unit 440 may further include a distance measurement sensor to sense a distance from the display 180.

The output unit 450 may output an image or voice signal which corresponds to manipulation of the user input unit 435 or a signal transmitted from the image display apparatus 100cd. The user may recognize whether the user input unit 435 is manipulated or the image display apparatus 100cd is controlled, through the output unit 450.

For example, the output unit 450 may include: an LED module 451 to be driven when the user input unit 435 is manipulated or when a signal is transmitted or received with respect to the image display apparatus 100cd through the wireless communication unit 425; a vibration module 453 configured to generate vibration; a sound output module 455 configured to output sound; or a display module 457 configured to output a image.

The power supply unit 460 may supply power to the remote controller 200. When the remote controller 200 does not move for a predetermined time, the power supply unit 460 may stop power supply to reduce power waste. The power supply unit 460 may resume power supply when a predetermined key included in the remote controller 200 is manipulated.

The storage 470 may store various types of programs and application data items required to control or operate the remote controller 200. When the remote controller 200 wirelessly transmits and receives a signal to and from the image display apparatus 100cd through the RF module 421, the remote controller 200 and the image display apparatus 100cd may transmit and receive the signal through a predetermined frequency band. The controller 480 of the remote controller 200 may store information about a frequency band, or the like for wirelessly transmitting and receiving a signal to and from the image display apparatus 100cd paired with the remote controller 200 in the storage 470, and may refer to the stored information.

The controller 480 may control overall information associated with control of the remote controller 200. The controller 480 may transmit a signal, which corresponds to manipulation of a predetermined key of the user input unit 435 or a signal corresponding to movement of the remote controller 200 sensed by the sensor unit 440, to the image display apparatus 100cd through the wireless communication unit 425.

The user input interface unit (not shown) of the image display apparatus 100cd may include: a wireless communication unit 151 for wirelessly transmitting and receiving a signal to and from the remote controller 200; and a coordinate value calculator 415 for calculating coordinate values of a pointer corresponding to an operation of the remote controller 200.

The user input interface unit (not shown) may wirelessly transmit and receive a signal to and from the remote controller 200 through an RF module 412. In addition, the user input interface unit (not shown) may receive a signal that is transmitted from the remote controller 200 according to IR communication protocols, through an IR module 413.

The coordinate value calculator 415 may calculate coordinates values (x, y) of a pointer 205 to be displayed on the display 170, by compensating for hand tremor or errors in a signal corresponding to an operation of the remote controller 200, which is received through the wireless communication unit 151.

A signal transmitted from the remote controller 200, which is input to the image display apparatus 100cd through the user input interface unit (not shown), may be transmitted to the controller 180 of the image display apparatus 100cd. The controller 180 may identify information about the operation and key manipulation of the remote controller 200 from the signal transmitted from the remote controller 200, and control the image display apparatus 100cd in response to the information.

As another example, the remote controller 200 may calculate pointer coordinate values corresponding to the operation, and output the pointer coordinate values to the user input interface unit (not shown) of the image display apparatus 100cd. In this case, the user input interface unit (not shown) of the image display apparatus 100cd may transmit information about the received pointer coordinate values to the controller 180 without separate compensation for hand tremor or error.

As another example, in contrary to the drawing, the coordinate value calculator 415 may be included in the controller 170a or 170b, but not in the user input interface unit (not shown).

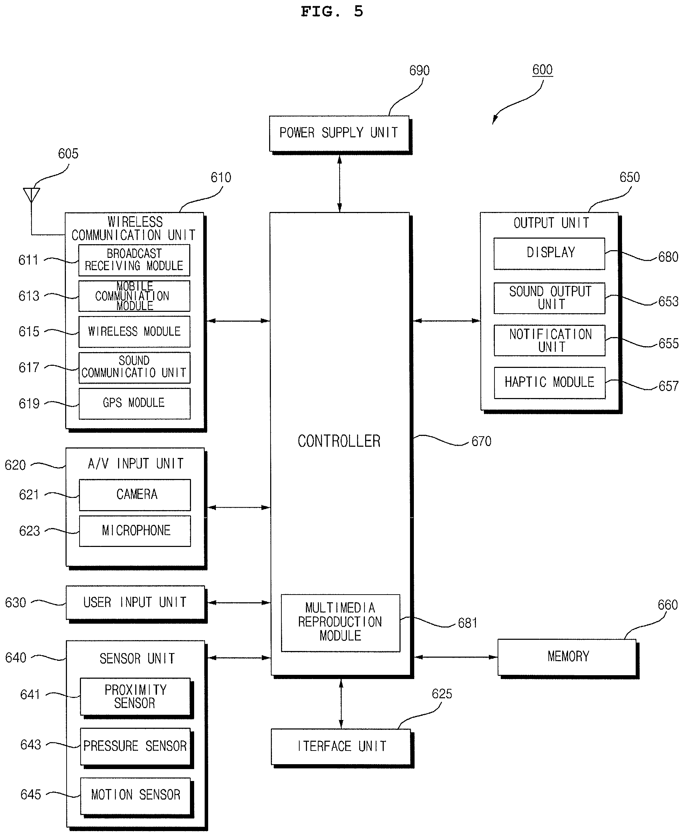

FIG. 5 is an internal block diagram of the mobile terminal shown in FIG. 1.

Referring to the drawing, a mobile terminal 600 may include a wireless communication unit 610, an audio/video (A/V) input unit 620, a user input unit 630, a sensor unit 640, an output unit 650, a memory 660, an interface unit 625, a controller 670, and a power supply unit 690.

The wireless communication unit 610 may include a broadcast receiving module 611, a mobile communication module 613, a wireless module 615, a sound communication unit 617, a global positioning system (GPS) module 619, and so on.

The broadcast receiving module 611 may receive at least one of a broadcast signal or broadcast related information from an external broadcast management server at a broadcast channel. In this case, the broadcast channel may include a satellite channel, a terrestrial channel, and so on.

The broadcast signal and/or broadcast related information received through the broadcast receiving module 611 may be stored in the memory 660.

The mobile communication module 613 may transmit and receive a radio signal to and from at least one of a base station, an external terminal, or a server in a mobile communication network. Here, the radio signal may include various types of data based on transmission and reception of a voice call signal, a videotelephony call signal, or a text/multimedia message.

The wireless module 615 may refer to a module for wireless access to the Internet and may be installed inside or outside the mobile terminal 600. For example, the wireless module 615 may perform WiFi-based wireless communication or Wi-Fi direct-based wireless communication.

The sound communication unit 617 may perform sound communication. The sound communication unit 617 may add predetermined information data to audio data to be output so as to output sound in a sound communication mode. In addition, the sound communication unit 617 may extract predetermined information data from externally received sound in the sound communication mode.

In addition, as a short-range communication technology, Bluetooth, radio frequency identification (RFID), infrared data association (IrDA), ultra-wideband (UWB), ZigBee, or the like may be used.

The global positioning system (GPS) module 619 may receive position information from a plurality of GPS satellites.

The A/V input unit 620 may be used to input an audio signal or a video signal and may include a camera 621, a microphone 623, and so on.

The user input unit 630 may generate key input data that is input by a user to control an operation of a terminal. To do so, the user input unit 630 may include a keypad, a dome switch, a touch pad (static pressure/electrostatic), and so on. In particular, when the touch pad configures an interlayer structure with a display 680, this may be referred to as a touchscreen.

The sensor unit 640 may detect a current state of the mobile terminal 600, for example, an opening and closing state of the mobile terminal 600, a position of the mobile terminal 600, and whether a user touches the mobile terminal 600, and generate a sensing signal for controlling an operation of the mobile terminal 600.

The sensor unit 640 may include a detection sensor 641, a pressure sensor 643, a motion sensor 645, and so on. The motion sensor 645 may detect the motion, position, and so on of the mobile terminal 600 using an acceleration sensor, a gyro sensor, a gravity sensor, and so on. In particular, the gyro sensor may be a sensor for measuring angular velocity and may detect a direction of rotation (angle of rotation) based on a reference direction.

The output unit 650 may include a display 680, an audio output unit 653, a notification unit 655, a haptic module 657, and so on.

The display 680 may display and output information processed by the mobile terminal 600.

Meanwhile, as described above, when the display 680 and a touchpad configure an interlayer structure to form a touchscreen, the display 680 may be used as an input device that allows information to be input through a user's touch, as well as an output device.

The audio output unit 653 may receive output audio data that is received from the wireless communication unit 610 or stored in the memory 660. The audio output unit 653 may include a speaker, a buzzer, or the like.

The notification unit 655 may output a signal to notify occurrence of an event in the mobile terminal 600. For example, the notification unit 655 may output a signal in the form of vibration.

The haptic module 657 may generate various haptic effects that a user is able to feel. A representative example of the haptic effect generated by the haptic module 657 may include a vibration effect.

The memory 660 may store a program for processing and control of the controller 670 and may also temporally store input or output data (e.g., a phonebook, messages, still images, and video images).

The interface unit 625 may interface with all external devices connected to the mobile terminal 600. The interface unit 625 may receive data or power from an external device and may transmit the data and power to each component inside the mobile terminal 600 or may enable data inside the mobile terminal 600 to be transmitted to an external device.

In general, the controller 670 may control an operation of each of the aforementioned components to control an overall operation of the mobile terminal 600. For example, the controller 670 may perform control and processing that are related to voice call, data communication, videotelephony, and so on. In addition, the controller 670 may include a multimedia reproduction module 681 for multimedia reproduction. The multimedia reproduction module 681 may be configured as hardware in the controller 670 or may be configured as software separately from the controller 670.

The power supply unit 690 may receive external and internal power and may supply power required for an operation of each component under control of the controller 670.

The block diagram of the mobile terminal 600 shown in FIG. 5 is a block diagram of an embodiment of the present invention. Components of the block diagram may be integrated, added, or omitted according to the specifications of the mobile terminal 600 that is actually embodied. That is, as necessary, two or more components may be integrated into one component or one component may be divided into two or more components. In addition, a function performed by each block is merely an embodiment of the present invention, and the scope of the present invention is not limited by a detailed operation or device.

FIGS. 6A to 8 are diagrams referred to in the description of the image display system shown in FIG. 1.

FIG. 6A illustrate an example in which an RF item 711 and an AV item 715 are selected while an input terminal selection screen 710 is displayed on the mobile terminal 600 in the image display system 10.

In response to selection of the Rf item 711 and the AV item 715, the mobile terminal 600 may transmit inputs of selection of a first input terminal and a second input terminal (inputs of selection of an RF selection and an AV selection) to the signal processor 100a of the image transmission apparatus 100ab.

The signal processor 100a may receive the inputs of selection of the first input terminal and the second input terminal included in the signal processor 100a from the mobile terminal 600, activate the first input terminal and the second input terminal based on the received selection inputs, and receive a first image from the first input terminal and a second image from the second input terminal.

That is, the signal processor 100a may receive the first image and the second image from the RF terminal and the AV terminal, respectively.

In addition, the splitter 142a in the wireless transmitter 100b may split the first image and the second image, and the communication unit 135a or 135b may wirelessly transmit the first image and the second image at a first channel and a second channel in a first frequency band.

The wireless receiver 100c may wirelessly receive the first image of a first resolution from a first source at the first channel in the first frequency band, and wirelessly receive the second image of a second resolution from a second source at the second channel in the first frequency band. In this case, the first resolution and the second resolution may be 2K resolution.

Meanwhile, the wireless receiver 100c may wirelessly receive the first image of the first resolution from a first input terminal of a first electronic device, and wirelessly receive the second image of the second resolution from a second input terminal of the first electronic device.

In particular, the merger 142b in the wireless receiver 100c may transmit a merged image consisting of the first image and the second image to the signal processor 100d.

The signal processor 100d may perform signal processing of the merged image consisting of the first image and the second image, and transmit the signal-processed image to the display apparatus 100.

Accordingly, the display 180 may display a first image 720a on the left side and a second image 720b on the right side.

Accordingly, the first image 720a having 2K resolution, received from the RF terminal, and the second image 720b having the 2K resolution, received from the AV terminal, may be displayed together, thereby improving user convenience.

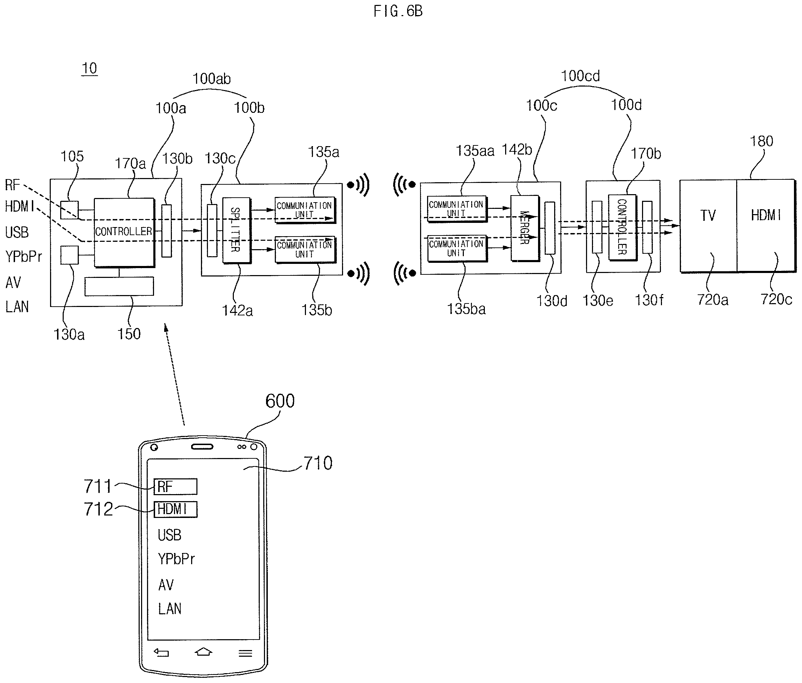

Similarly to FIG. 6A, FIG. 6B illustrates an example in which an RF item 711 and an HDMI item 712 are selected while an input terminal selection screen 710 is displayed on the mobile terminal 600 in the image display system 10.

Accordingly, the signal processor 100a may receive inputs of selection of a first input terminal and a second input terminal included in the signal processor 100a from the mobile terminal 600, activate the first input terminal and the second input terminal based on the received selection inputs, and receive a first image from the first input terminal and a second image from the second input terminal.

That is, the signal processor 100a may receive a first image and a second image from an RF terminal and an HDMI terminal, respectively.

As a result, the display 180 may display a first image 720a on the left side and a second image 720c on the right side.

Accordingly, the first image 720a having 2K resolution, received from the RF terminal, and the second image 720c having 2K resolution, received from the HDMI terminal, may be displayed, thereby improving user convenience.

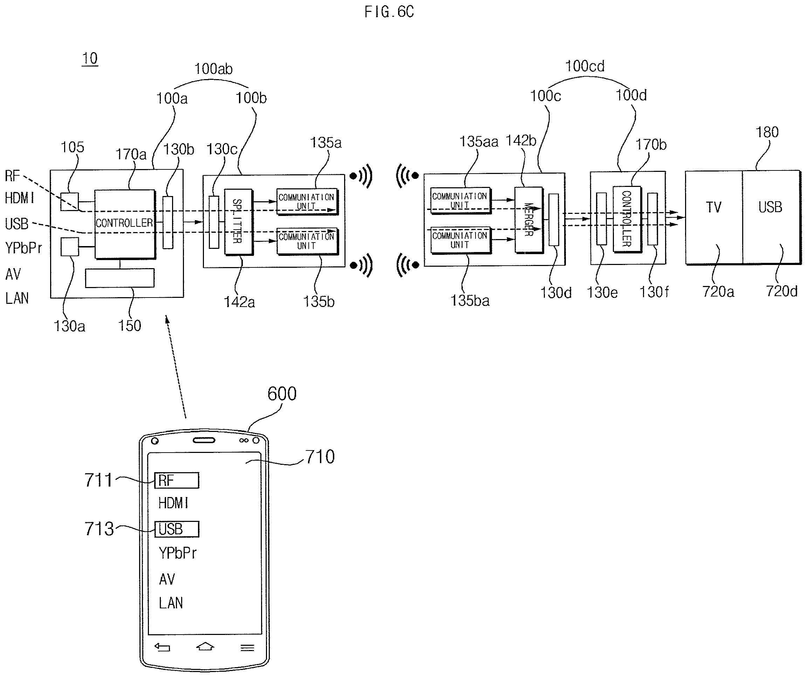

Similarly to FIG. 6A, FIG. 6C illustrates an example in which an RF item 711 and a USB item 713 are selected while an input terminal selection screen 710 is displayed on the mobile terminal 600 in the image display system 10.

Accordingly, the signal processor 100a may receive inputs of selection of a first input terminal and a second input terminal included in the signal processor 100a from the mobile terminal 600, activate the first input terminal and the second input terminal based on the received selection inputs, and receive a first image from the first input terminal and a second image from the second input terminal.

That is, the signal processor 100a may receive a first image and a second image from an RF terminal and a USB terminal, respectively.

As a result, the display 180 may display a first image 720a on the left side and a second image 720d on the right side.

Accordingly, the first image 720a having 2K resolution, received from the RF terminal, and the second image 720d having 2K resolution, received from the USB terminal, may be displayed, thereby improving user convenience.

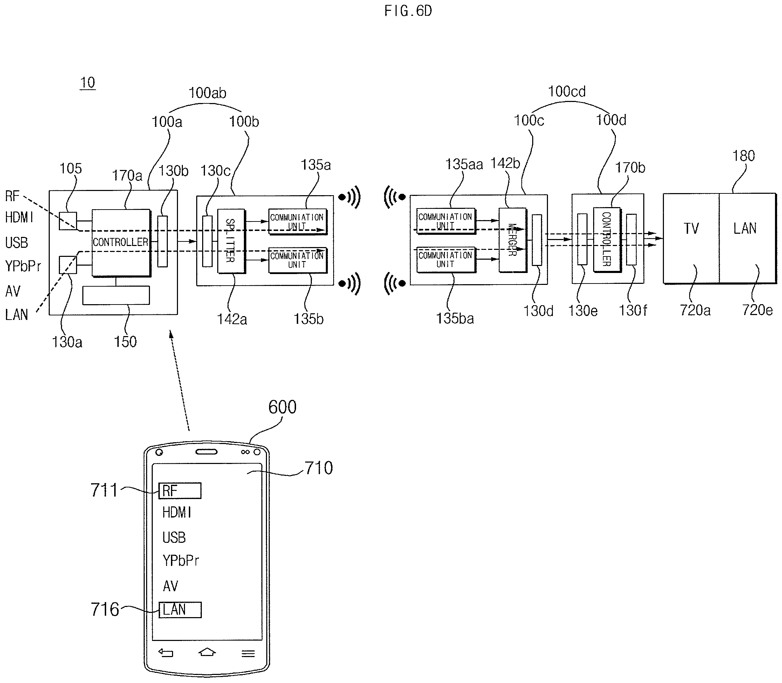

Similarly to FIG. 6A, FIG. 6D illustrates an example in which an RF item 711 and an LAN item 716 are selected while an input terminal selection screen 710 is displayed on the mobile terminal 600 in the image display system 10.

Accordingly, the signal processor 100a may receive inputs of selection of a first input terminal and a second input terminal included in the signal processor 100a from the mobile terminal 600, activate the first input terminal and the second input terminal based on the received selection inputs, and receive a first image from the first input terminal and a second image from the second input terminal.

That is, the signal processor 100a may receive a first image and a second image from an RF terminal and an LAN terminal, respectively.

As a result, the display 180 may display a first image 720a on the left side and a second image 720e on the right side.

Accordingly, the first image 720a having 2K resolution, received from the RF terminal, and the second image 720e having 2K resolution, received from the LAN terminal, may be displayed, thereby improving user convenience.

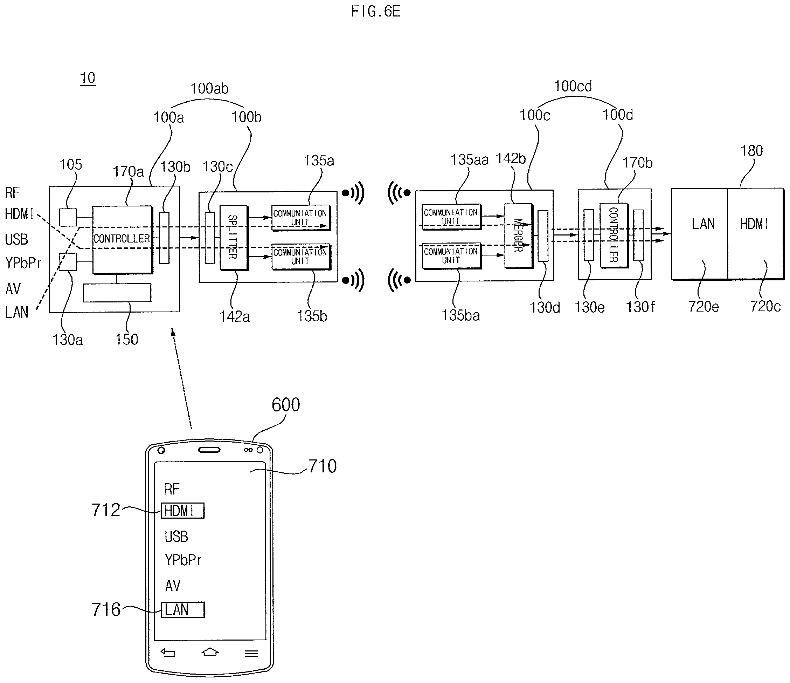

Similarly to FIG. 6A, FIG. 6E illustrates an example in which an HDMI item 712 and an LAN item 716 are selected while an input terminal selection screen 710 is displayed on the mobile terminal 600 in the image display system 10.

Accordingly, the signal processor 100a may receive inputs of selection of a first input terminal and a second input terminal included in the signal processor 100a from the mobile terminal 600, activate the first input terminal and the second input terminal based on the received selection inputs, and receive a first image from the first input terminal and a second image from the second input terminal.

That is, the signal processor 100a may receive a first image and a second image from an LAN terminal and an HDMI terminal, respectively.

As a result, the display 180 may display a first image 720e on the left side and a second image 720c on the right side.

Accordingly, the first image 720e having 2K resolution, received from the LAN terminal, and the second image 720c having 2K resolution, received from the HDMI terminal, may be displayed, thereby improving user convenience.

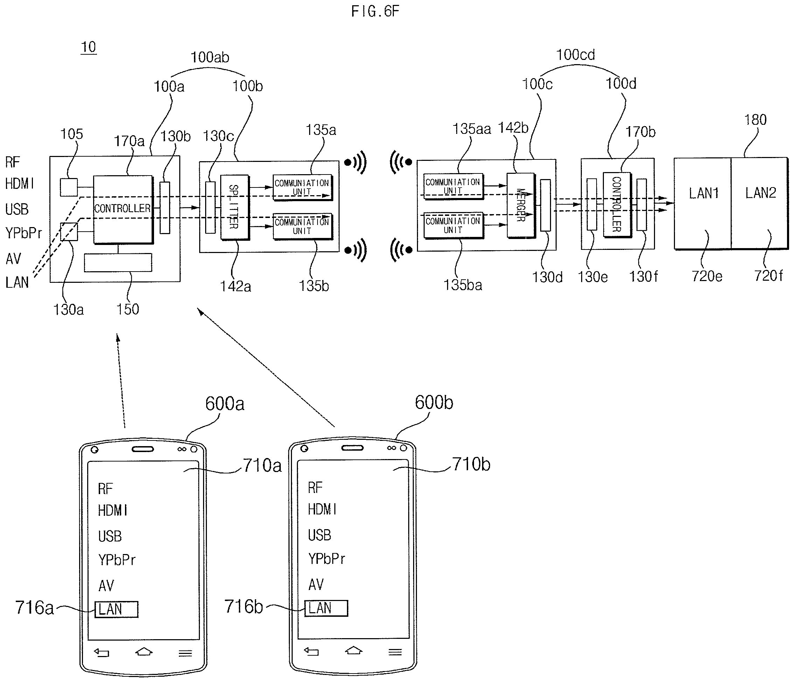

Similarly to FIG. 6A, FIG. 6F illustrates an example in which an LAN item 716a is selected while an input terminal selection screen 710a is displayed on a mobile terminal 600a in the image display system 10, and an LAN item 716b is selected while an input terminal selection screen 710b is displayed on a mobile terminal 600b in the image display system 10.

Accordingly, the signal processor 100a may receive inputs of selection of LAN terminals from the mobile terminals 600a and 600b, activate the respective LAN terminals based on the received selection inputs, and receive a first image and a second image from the respective LAN terminals.

That is, the signal processor 100a may receive a first image and a second image from the respective LAN terminals.

As a result, the display 180 may display a first image 720e on the left side and a second image 720f on the right side.

Accordingly, the first image 720e having 2K resolution, received from one LAN terminal, and the second image 720f having 2K resolution, received from the other LAN terminal, may be displayed, thereby improving user convenience.

Meanwhile, the wireless receiver 100c may wirelessly receive a first image of a first resolution from a first source at a first channel in a first frequency band, and wirelessly receive a second image of a second resolution from a second source at a second channel in a second frequency band.

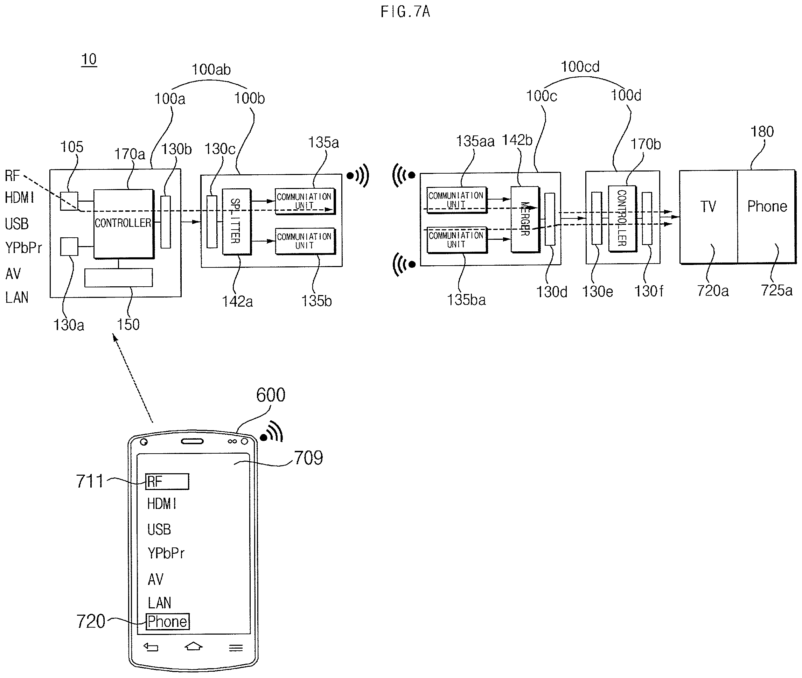

In particular, the wireless receiver 100c may receive a first image of a first resolution from a first electronic device, and wirelessly receive a second image of a second resolution from a second electronic device. A detailed description thereof will be provided with reference to FIG. 7A.

Similarly to FIG. 6A, FIG. 7A illustrates an RF item 711 and a phone item 720 are selected while an input terminal selection screen 709 is displayed on the mobile terminal 600 in the image display system 10.

Accordingly, the signal processor 100a in the image transmission apparatus 100a may receive an input of selection of a first input terminal (an RF terminal) included in the signal processor 100a from the mobile terminal 600, activate the first input terminal (the RF terminal) based on the received selection input, and receive a first image from the first input terminal (the RF terminal).

Meanwhile, in response to the selection of the phone item 720, the mobile terminal 600 may transmit a second image may transmit to the wireless receiver 100c included in the image display apparatus 100cd.

Accordingly, the first communication unit 135aa of the wireless receiver 100c included in the image display apparatus 100cd may receive the first image from the image transmission apparatus 100a, and the second communication unit 135ba may receive the second image from the mobile terminal 600.

Then, according to signal processing by the signal processor 100d, the display 180 may display a first image 720a on the left side and a second image 725a on the right side.

Accordingly, the first image 720a having 2K resolution, received from the RF terminal, and the second image 725a having 2K resolution, received from the mobile terminal 600, may be displayed together, thereby improving user convenience.

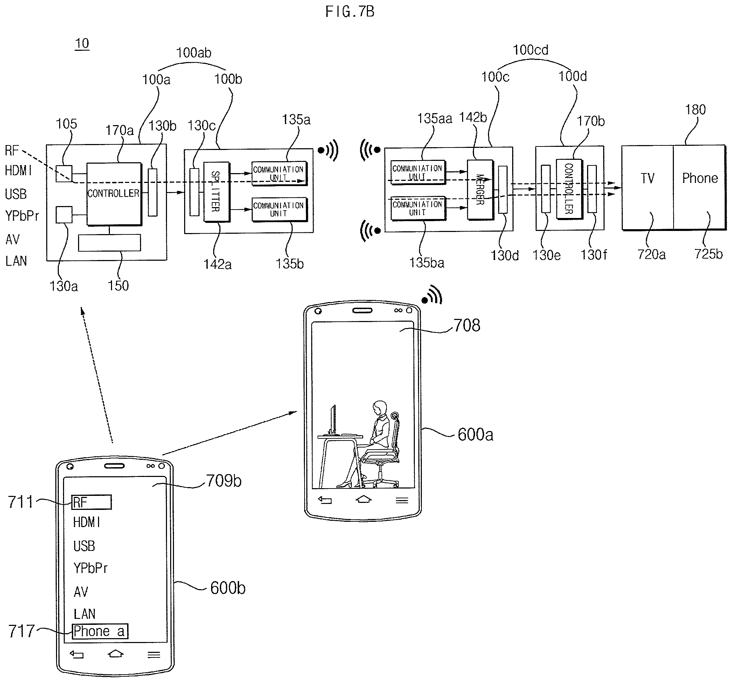

Similarly to FIG. 7A, FIG. 7B illustrates an RF item 711 and a phone a item 717a are selected while an input terminal selection screen 709b is displayed on a mobile terminal 600b in the image display system 10.

Accordingly, the signal processor 100a in the image transmission apparatus 100ab may receive an input of selection of a first input terminal (an RF terminal) included in the signal processor 100a from the mobile terminal 600b, activate the first input terminal (the RF terminal) based on the received selection input, and receive a first image from the first input terminal (the RF terminal).

Meanwhile, in response to the selection of the phone a item 717a, the mobile terminal 600b may transmit a second image may transmit to a second image terminal 600a.

Accordingly, the first communication unit 135aa of the wireless receiver 100c included in the image display apparatus 100cd may receive the first image from the image transmission apparatus 100a and the second image from the mobile terminal 600b.

Then, according to signal processing by the signal processor 100d, the display 180 may display a first image 720a. While the first image 720a is displayed on the left side in the drawing, the first image 720a may be displayed on the entire area of the display 180.

Meanwhile, the second mobile terminal 600a may receive the second image from the mobile terminal 600b, perform signal processing of the second image, and display the second image which has been signal-processed.

As such, it is possible to select at least two source items using the mobile terminal 600b, thereby improving user convenience, and especially enable image transmission to a different mobile terminal, thereby enabling transmission of an image in the mobile terminal 600b.

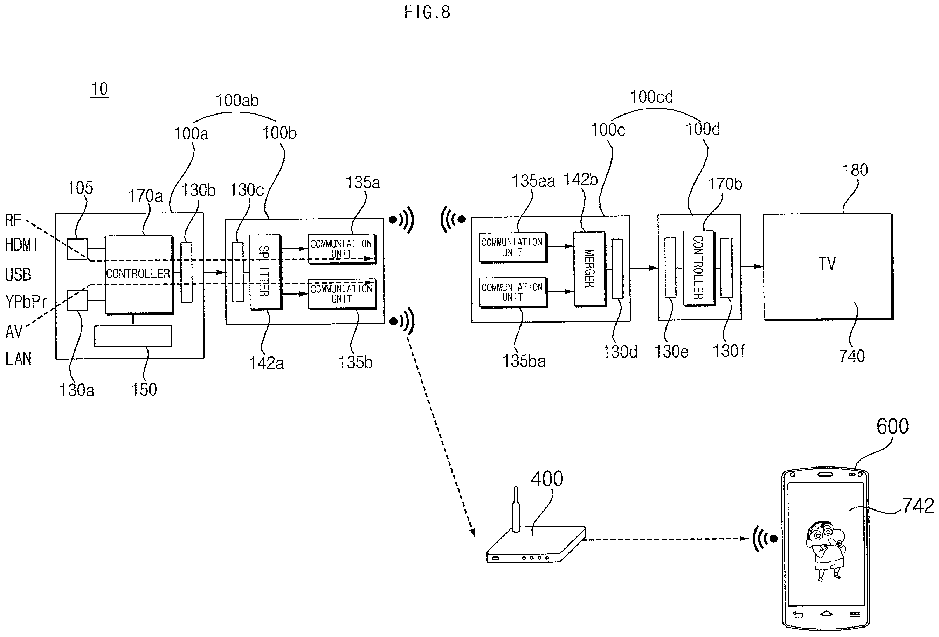

FIG. 8 shows the case where the image transmission apparatus 100ab transmits a first image to the image display apparatus 100cd and a second image to the mobile terminal 600.

Similarly to FIG. 6, FIG. 8 shows an example in which the signal processor 100a in the image transmission apparatus 100ab activates a first input terminal (an Rf terminal) and a second input terminal (an AV terminal) to receive a first image and a second image from the first input terminal (the RF terminal) and the second input terminal (the AV terminal), respectively, and perform signal processing of the first image and the second image.

Next, the first communication unit 135a in the wireless transmitter 100b may wirelessly transmit a first image to the image display apparatus 100cd, and wirelessly transmit a second image to the mobile terminal 600 via the AP device 400.

Such transmission control may be performed by a remote control signal from the mobile terminal 600 or a remote control signal from a remote controller.

For example, although not shown in the drawing, if an image receiving apparatus selection screen is displayed on a screen of the mobile terminal 600 in addition to an image source selection screen, an image transmission apparatus and a mobile terminal may be selected from the image receiving apparatus selection screen of the mobile terminal 600.

In this case, the mobile terminal 600 may transmit information on an image display apparatus item and a mobile terminal item to the image transmission apparatus 100ab.

Accordingly, as shown in the drawing, the image transmission apparatus 100ab may wirelessly transmit a first image to the image display apparatus 100cd, and wirelessly transmit a second image to the mobile terminal 600 via the AP device 400.

As a result, a first image 740 may be displayed on the full screen of the display 180 of the image display apparatus 100cd, and a second image 742 may be displayed on a display 680 of the mobile terminal 600. Accordingly, a user is allowed to watch each image using a desired device.

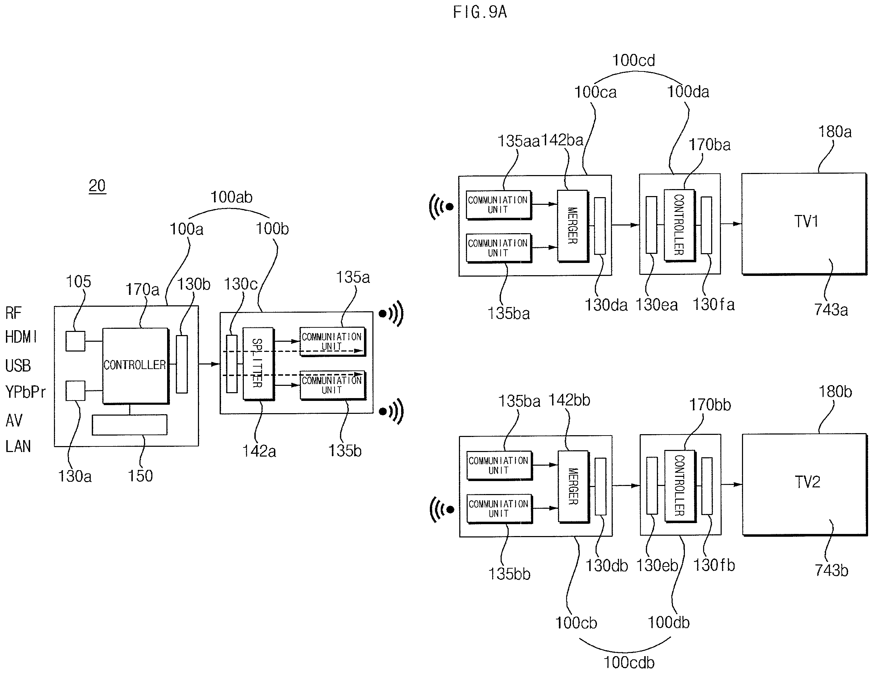

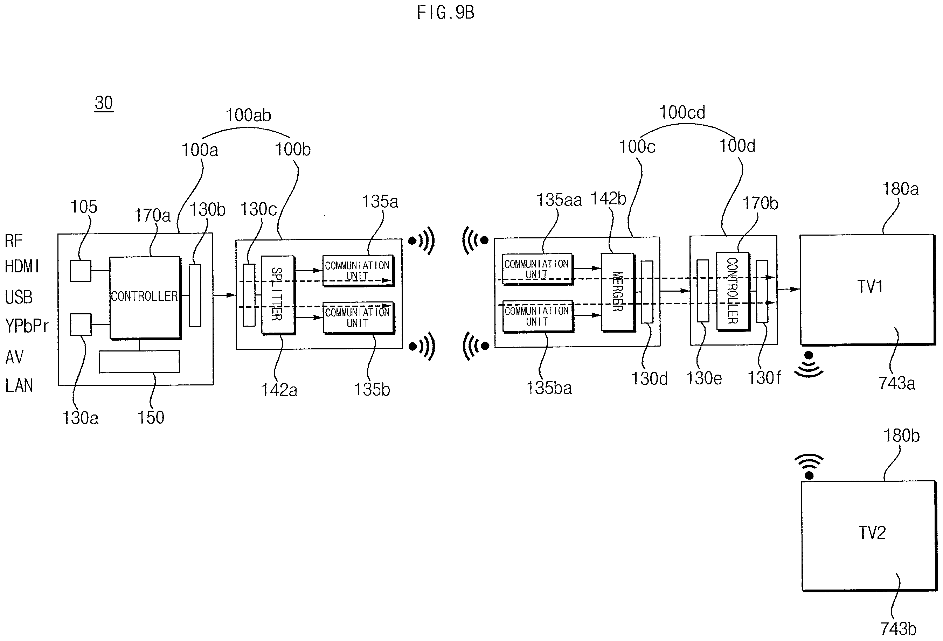

FIGS. 9A and 9B are diagrams showing an image display system according to various embodiments of the present invention.

An image display system 20 in FIG. 9A is different from the image display system 10 in FIG. 2 in that two image display apparatuses 100cd and 100cdb are provided for a single image transmission apparatus 100ab.

The image transmission apparatus 100ab may receive at least two images from an RF terminal (referred in other words to as an antenna terminal), an HDMI terminal, a USB terminal, a YPbPr terminal, an AV terminal, an LAN terminal, etc., and wirelessly transmit a first image to the first image display apparatus 100cd at a first channel in a first frequency band, and wirelessly transmit a second image to a second image display apparatus 100cdb at a second channel in the first frequency band.

Accordingly, the first an second image display apparatuses 100cd and 100cdb respectively perform signal processing of the first image and the second image and display the first image and the second image on displays 180a and 180b respectively provided therein. Accordingly, it is possible to watch desired images respectively using the first and second image display apparatuses 100cd and 100cdb, disposed at different positions, through one image transmission apparatus 100ab provided at home, thereby improving user convenience.

Meanwhile, such image receiving apparatuses may be selected in the mobile terminal 600, as described above.

Next, an image display system 30 in FIG. 9B is different from the image display system 20a in that one image display apparatus 100cd is provided for one image transmission apparatus 100ab, wherein two displays 180a and 180b are provided in the image display apparatus 100cd.

The image transmission apparatus 100ab may receive at least two images from an RF terminal (referred in other words to as an antenna terminal), an HDMI terminal, a USB terminal, a YPbPr terminal, an AV terminal, an LAN terminal, etc., and wirelessly transmit a first image to the image display apparatus 100cd at a first channel in a first frequency band, and wirelessly transmit a second image to the image display apparatus 100cd at a second channel in the first frequency band.

In addition, on contrary to FIG. 9A, signal processing of the first image and the second image may be performed by the wireless receiver 100c and the signal processor 100d.

Then, the signal processor 100d transmits the first and second images through wire to the first display 180a.

Meanwhile, the first display 180a and the second display 180b may perform a wireless communication function, and thereby, the first display 180a may transmit the second image out of the received first and second images to the second display 180b.

Accordingly, the first image and the second image may be displayed on the first display 180a and the second display 180b.

Accordingly, it is possible to watch desired images respectively using the first and second displays 180a and 180b, disposed at different positions, through one image transmission apparatus 100ab provided at home, thereby improving user convenience.

Meanwhile, on the contrary to FIG. 9B, the first display 180a and the second display 180b may be connected through wire to the signal processor 100d.

In this case, the signal processor 100d may transmit the second image out of the first and second images to the first display 180a and the second display 180b.

Accordingly, it is possible to watch desired images respectively using the first and second displays 180a and 180b, disposed at different positions, through one image transmission apparatus 100ab provided at home, thereby improving user convenience.

The operating method of an image display apparatus or an image display system according to the present invention may also be embodied as processor readable code on a processor readable recording medium in the image display apparatus or the image display system. The processor readable recording medium is any type of recording device that stores processor readable data. Examples of the processor readable recording medium include read-only memory (ROM), random-access memory (RAM), CD-ROMs, magnetic tapes, hard disks, floppy disks, a optical data storage devices, etc. and also include a carrier wave such as transmission via the Internet. In addition, the processor readable recording medium may also be distributed over network coupled computer systems so that the processor readable code is stored and executed in a distributed fashion.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. An image display apparatus comprising:
a wireless receiver configured to wirelessly receive a first image of a first resolution from a first source, wirelessly receive a second image of a second resolution from a second source, merge the first image of the first resolution and the second image of the second resolution, and output a merged image;
a signal processor configured to perform signal processing of the merged image received from the wireless receiver; and
a display configured to display the merged image received from the signal processor.

2. The image display apparatus of claim 1, wherein the wireless receiver is configured to wirelessly receive the first image of the first resolution from the first source at a first channel in a first frequency, and wirelessly receive the second image of the second resolution from the second source at a second channel in the first frequency band.

3. The image display apparatus of claim 1, wherein the wireless receiver is configured to wirelessly receive the first image of the first resolution from the first source at a first channel in a first frequency, and wirelessly receive the second image of the second resolution from the second source at a second channel in a second frequency band.

4. The image display apparatus of claim 1, wherein the wireless receiver is configured to wirelessly receive the first image of the first resolution from a first input terminal of a first electronic device, and wirelessly receive the second image of the second resolution from a second input terminal of the first electronic device.

5. The image display apparatus of claim 1, wherein the wireless receiver is configured to wirelessly receive the first image of the first resolution from a first electronic device, and wirelessly receive the second image of the second resolution from a second electronic device.

6. The image display apparatus of claim 1,
wherein the first resolution and the second resolution are 2K resolution, and
wherein the display displays a merged image having 4K resolution.

7. An image display system comprising:
an image transmission apparatus, wherein the image transmission apparatus comprises a signal processor configured to receive a first image from a first input terminal, perform signal processing of the first image and the second image, and output the first image and the second image signal-processed, and a wireless transmitter configured to split the first image and the second image received from the signal processor, wirelessly transmit the first image at a first channel in a first frequency band, and wirelessly transmit the second image at a second channel in the first frequency band; and
an image display apparatus, wherein the image display apparatus comprises a wireless receiver configured to wirelessly receive the first image of the first resolution and the second image of the second resolution from the image transmission apparatus, merge the first image of the first resolution and the second image of the second resolution, and output a merged image, a signal processor configured to perform signal processing of the merged image received from the wireless receiver, and a display configured to display the merged image received from the signal processor.

8. The image display system of claim 7, wherein the signal processor is configured to receive inputs of selection of a first input terminal and a second input terminal included in the signal processor from a mobile terminal, activate the first input terminal and the second input terminal based on the received selection inputs, and receive the first image from the first input terminal and the second image from the second input terminal.

9. The image display system of claim 7, wherein, when transmission from the first input terminal included in the signal processor is selected in the mobile terminal,
the signal processor is configured to receive an input of selection of the first input terminal from the mobile terminal, activate the first input terminal based on the received selection input, and receive the first image from the first input terminal, and
the wireless receiver is configured to wirelessly receive the first image of the first resolution from the image transmission apparatus, receive a third image having a third resolution from the mobile terminal, merge the first image of the first resolution and the third image having the third resolution, and output a merged image.

10. The image display system of claim 7, wherein the wireless receiver is configured to wirelessly receive the first image of the first resolution from the first source at a first channel in a first frequency band, and wirelessly receive the second image of the second resolution from the second source at a second channel in the first frequency band.

11. The image display apparatus of claim 7, wherein the wireless receiver is configured to wirelessly receive the first image of the first resolution from the first source at a first channel in a first frequency, and wirelessly receive the second image of the second resolution from the second source at a second channel in a second frequency band.

12. The image display apparatus of claim 7, wherein the wireless receiver is configured to wirelessly receive the first image of the first resolution from a first input terminal of a first electronic device, and wirelessly receive the second image of the second resolution from a second input terminal of the first electronic device.

13. The image display apparatus of claim 7, wherein the wireless receiver is configured to wirelessly receive the first image of the first resolution from a first electronic device, and wirelessly receive the second image of the second resolution from a second electronic device.

14. The image display apparatus of claim 7,
wherein the first resolution and the second resolution are 2K resolution, and
wherein the display displays a merged image having 4K resolution.
